# EUROPEAN PATENT SPECIFICATION

(11) **EP 0 893 190 B1**
(45) Date of publication and mention of the grant of the patent: **10.05.2006**
(21) Application number: 98305692.0
(22) Date of filing: 16.07.1998
(51) Int. Cl.: B23K 20/12, B23K 33/00, B29C 65/06

(54) **Constructive body and friction stir welding method**
Bauelement und oszillierendes Reibschweissverfahren
Elément constructif et procédé de soudage par friction à mouvement cyclique

(30) Priority: 23.07.1997 JP 19676197; 08.06.1998 JP 15879798
(43) Date of publication of application: 27.01.1999
(73) Proprietor: Hitachi, Ltd., Chiyoda-ku, Tokyo 100-8010 (JP)
(72) Inventor: Ezumi, Masakuni, Kudamatsu-shi, Yamaguchi 744-0002 (JP); Aota, Kinya, Hitachi-shi, Ibaraki 319-1225 (JP); Ishimaru, Yasuo, Kudamatsu-shi, Yamaguchi 744-0031 (JP); Kawasaki, Takeshi, Kudamatsu-shi, Yamaguchi 744-0002 (JP)
(74) Representative: Paget, Hugh Charles Edward

(56) References cited:
- EP-A- 0 288 884
- EP-A- 0 474 510
- EP-A- 0 653 265
- EP-A- 0 797 043
- CH-A- 155 192
- US-A- 4 004 373
- DAWES C J ET AL: "FRICTION STIR PROCESS WELDS ALUMINUM ALLOYS" WELDING JOURNAL,US,AMERICAN WELDING SOCIETY. MIAMI, vol. 75, no. 3, 1 March 1996 (1996-03-01), pages 41-45, XP000587301 ISSN: 0043-2296
- PATENT ABSTRACTS OF JAPAN vol. 1998, no. 06, 30 April 1998 (1998-04-30) -& JP 10 052772 A (HITACHI LTD), 24 February 1998 (1998-02-24)

## Description

The present invention relates to a structural body having two members joined by friction stir welding method and to a a method of making the same. For example, the present invention relates to a friction stir welding method suitable for use in an aluminum alloy member which is employed for use a car body of a railway car and a constructive body etc..

A friction stir welding method is a method in which by rotating a round-shape rod (hereinafter is called as a rotary body) inserted in a joining region and further moving the rotary body along to a joining line, the joining portion is heated, and the material is softened and plastically flown and thus the material is solid-phase joined.

The rotary body comprises a small diameter portion which is inserted in the joining portion and a large diameter portion which is positioned outside the small diameter portion. The small diameter portion and the large diameter portion are positioned on the same axis. A side of the large diameter portion is rotated. A boundary portion between the small diameter portion and the large diameter portion can be inserted a little into the joining region.

A joining according to the friction stir welding method can be applied to an abutting portion and an overlapping portion. The above stated technique is disclosed, for example, in Japanese patent announcement laid-open publication No. 505090 (EP 0615480 B1), "Welding & Metal Fabrication (January 1995), pages 13-14 and 16, and "Welding Journal" (March 1996, pages 41-45 (which discloses in combination the features of the first part of present claim 1).

Japanese patent laid-open publication No. Hei 9-309164 (laid-open date: December 2, 1997) (corresponding to EP 0797043 A2 (laid-open date: September 24, 1997) relates to a friction stir welding method about a hollow shape member and discloses as a center a rib for connecting two face sheets the friction stir welding is carried out.

Further, a concave portion is provided on the face sheet of a joining portion. Further, this Japanese patent laid-open publication was published after the first priority application (Japanese patent application No. Hei 9-196761, application date: July 23, 1997) of the present application.

In the friction stir welding method, since the rotary body as a joining tool is inserted to a welding member to be subjected, a large force works to the welding member to be subjected. On the country to this, in a conventional arc melting welding method, since a welding portion is fused and welded, the force such as during the friction welding working does not generates.

For this reason, in a case the friction stir welding method is applied to an I type joint shape member for use in the conventional arc melting method, since a clearance occurs on the joint shape members, accordingly a good welding can not be obtained.

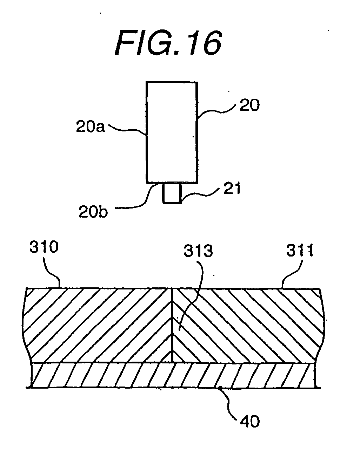

The above facts will be explained concretely using from Fig. 16 to Fig. 18. Two members 310 and 311 to be welded (for example, aluminum alloys) have a substantially same thickness of a joining portion and are placed in parallel each other and further have vertical abutting faces 313. Under a condition to which the abutting faces 313 are contacted each other, and further under a condition in which the two members 310 and 311 are fixed to a bed stand 40, the friction stir welding method is carried out.

By rotating a rotary body 20 as a joining use tool comprised of a round shape rod having a concave shape small diameter portion 21 at a lower end, the concave shape small diameter portion 21 is inserted to joint shape members, at this condition the rotary body 20 is moved along to an abutting portion of the two members 310 and 311 and then the two members 310 and 311 are welded.

A substantially flat boundary portion 20b formed between the small diameter portion 21 and a large diameter portion 20a is positioned a little toward a lower portion from upper portions of the two members 310 and 311. Since a length of the small diameter portion 21 is smaller than the thickness of the two members 310 and 311, the welding is carried out only on upper face sides of the two members 310 and 311. Namely, a non-penetration type friction stir welding method is carried out.

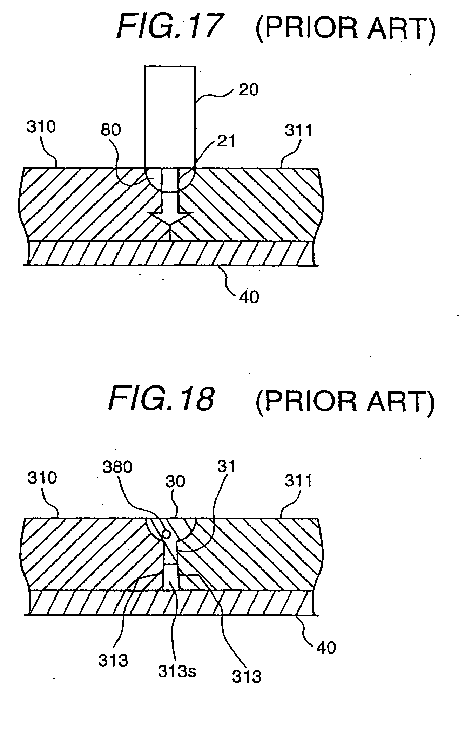

In Fig. 17, a vicinity of the rotary body 20 presents a plastic flow condition. A plastic flow body at a plastic flow area 30 is tried to discharge to a surface but a move in the most part is restrained by the boundary portion 20b.

As a result, to the abutting face 313 of the two members 310 and 311 a downward direction and a lateral direction force works. Accordingly, the plastic flow body of the plastic flow area 30 is pushed out toward a lower portion from between the abutting faces 313 and 313, and then a clearance between the abutting faces 313 and 313 is enlarged.

As a result, as shown in Fig. 18, the plastic flow body 31 is flown out toward the lower portion of the plastic flow area 30 and an enlarged clearance 313s is generated at the lower portion. Further, a volume part of the plastic flow body 31 which is flown out toward the plastic flow area 30 is insufficient, voids 380 for forming a defect generate on the plastic flow area 30. Therefore, a normal welding can not carried out. Further, the plastic flow area shows a substantial a welding bead 30.

The inventors of the present invention discovered the above stated phenomenon through various experimentation. In the above stated the non-penetration I type joint shape members, in a case where a clearance formed between the abutting faces 313 and 313 before the welding is more than 0.2 mm, they found out that a good welding can not carried out.

Further, the friction stir welding is carried out by setting forth a premise that the clearance formed between the abutting faces 313 and 313 is extremely small as stated in the above. A large scale constructive body, such as a car body of a railway car, in a case where the friction stir welding is carried on extruded frame members having about 25 m, a clearance becomes larger due to an accuracy of the extruded frame member, as a result it is difficult to carry out the welding.

Further, in a case where the welding is carried out on hollow shape members, a face sheet is dented, therefore it is impossible to carry out a good welding. Further, at a start point of the welding, it is difficult to carry out a good welding. Further, at a finish point of the welding, also it is difficult to carry out a good welding.

A first preferred object of the present invention is to obtain a good friction stir welding.

A second preferred object of the present invention is to weld suitably a member such as a hollow shape member.

A third preferred object of the present invention is to obtain a light weight structure of a member such as a hollow shape member.

A fourth preferred object of the present invention is to carry out a good welding at a start point and a finish point of the welding.

In one aspect the invention provides a structural body having two members joined by friction stir welding, as set out in claim 1.

In a second aspect, the invention provides a method of making such a body, as set out in claim 5.
Fig. 1 is a longitudinal cross-sectional view showing one form of a friction stir welding joint method as background to the present invention;
Fig. 2 is a longitudinal cross-sectional view showing the joint member after the friction stir welding in Fig. 1;
Fig. 3 is a longitudinal cross-sectional view showing an embodiment of a friction stir welding joint member according to the present invention;
Fig. 4 is a longitudinal cross-sectional view showing the joint member after the friction stir welding in Fig. 3;
Fig. 5 is a longitudinal cross-sectional view showing a further friction stir welding joint method as background to the present invention;
Fig. 6 is a longitudinal cross-sectional view showing a further embodiment of a friction stir welding joint member according to the present invention;
Fig. 7 is a longitudinal cross-sectional view showing a further embodiment of a friction stir welding joint member according to the present invention;
Fig. 8 is a longitudinal cross-sectional view showing a further embodiment of a friction stir welding joint member according to the present invention;
Fig. 9 is a longitudinal cross-sectional view showing the joint member after the friction stir welding in Fig. 8;
Fig. 10 is a squint view showing one embodiment of a car body of a railway car in which the present invention is adopted;
Fig. 11 is a longitudinal cross-sectional view showing a further embodiment of a friction stir welding joint member before a welding according to the present invention;
Fig. 12 is a longitudinal cross-sectional view showing an essential portion of the joint member before a welding according to the present invention;
Fig. 13 is a longitudinal cross-sectional view showing a further embodiment of a friction stir welding joint member before a welding according to the present invention;
Fig. 14 is a longitudinal cross-sectional view showing a further embodiment of a friction stir welding joint member before a welding according to the present invention;
Fig. 15 is a longitudinal cross-sectional view showing a further construction of a friction stir welding joint member, which is not an embodiment of the present invention.
Fig. 16 is a longitudinal cross-sectional view showing a friction stir welding joint member in a comparison example;
Fig. 17 is a longitudinal cross-sectional view showing the joint member during a friction stir welding in Fig. 16;
Fig. 18 is a longitudinal cross-sectional view showing the joint member after the friction stir welding in Fig. 16; and
Fig. 19 is a longitudinal cross-sectional view showing the joint member after the friction stir welding in the comparison example.

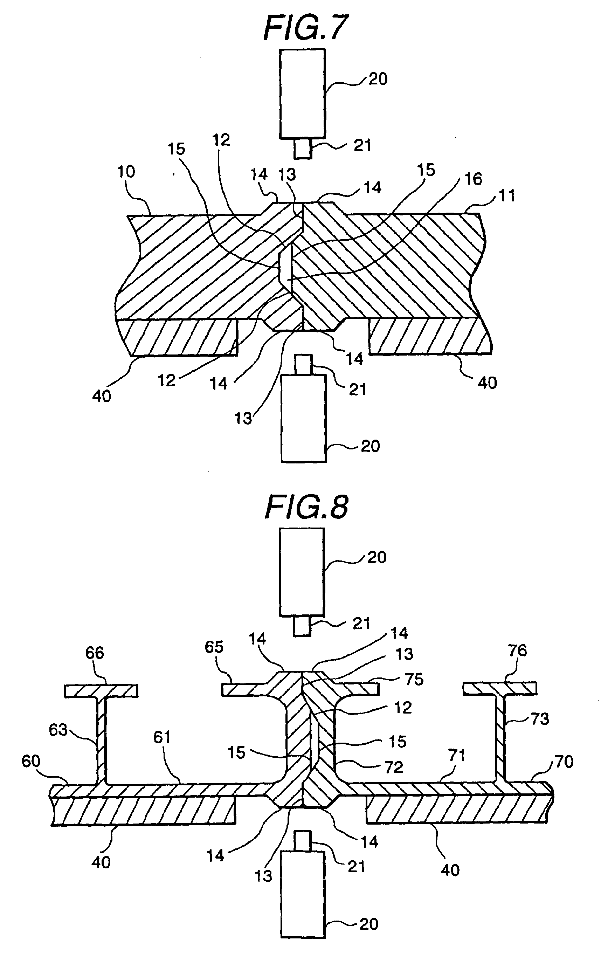

Embodiments of the present invention will be explained referring to the Figures. A material for each of metal members 10 and 11 as a member to be welded is an aluminum alloy, for example. Each of the metal member can be applied to a car body of a railway car shown in from Fig. 8 to Fig. 10.

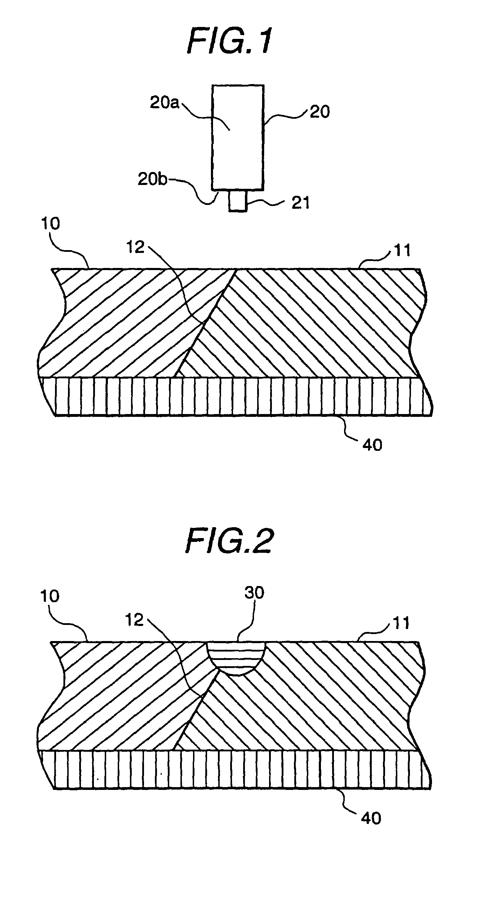

The method shown in Fig. 1 and Fig. 2 will be explained. Slanting surfaces 12 are provided on all faces of an abutting face of the members 10 and 11 (for example, an aluminum alloy) to be welded. At an abutting portion of upper face sides of the members 10 and 11, a center of a small diameter portion 21 of a rotary body 20 is positioned.

The rotary body 20 provides the small diameter portion having a small diameter 21 at a tip end a round-shape rod having a large diameter. The welding is carried out by rotating the rotary body 20 the rotary body 20 is inserted to the members 10 and 11 and the rotary body 20 is moved along to a joining line.

A boundary portion 20b formed between the large diameter portion 20a and the small diameter portion 21 of the rotary body 20 is indented toward a large diameter portion 20a side and has a circular arc shape. The small diameter portion 21 is formed with a screw member. During a welding working, as to an axis center of the rotary body 20, the large diameter portion 20a side is inclined backward against to a moving direction of the rotary body 20.

As a result, a back end of the boundary portion 20 is entered to the members 10 and 11 but a front end thereof is positioned at upper portions of the members 10 and 11. The above stated "back end" and "front end" etc. are standardized the moving direction of the rotary body 20. A tip end of the small diameter portion 21 does not penetrate the members 10 and 11.

So at to carrying out the welding, the members 10 and 11 are pushed down and restricted from an upper portion to a bed stand 40 by a vise or an apparatus. An interval in a horizontal direction of the members 10 and 11 is made small and the slanting surfaces are contacted or a clearance between the abutting faces are made small as possible.

The contact of the slant spaces 12 is carried out by pressing against the member 10 toward for the member 11 (in Fig. 1, a left and right direction). During the welding working, a left side and a right side of the rotary body 20 are pressed against the bed stand 40 from the upper portion.

Since the slanting surfaces 12 are substantially contacted, a flow of a plastic flow body for flowing out to a lower portion can be restrained. As a result, a generation of a clearance according to the flow-out of the member can be restrained and it is possible to carry out a good friction stir welding as shown in Fig. 2. Reference numeral 30 denotes a welding bead according to the friction stir welding. A configuration of the welding bead 30 shown in Fig. 2 is expressed schematically.

A welding bead 30 portion of the upper portion side member 10 is supported by the slanting surface 12 of the lower portion side member 11. As a result, the member 10 at a vicinity of the welding bead 30 does not bend by a large vertical force which is acted on the friction stir welding working. This will be understood easily by removing the slanting surface 12 from the member 11.

Further, since the slanting surface 12 is provided, the member 11 can not be positioned at the upper portion against the member 10, accordingly a slip-off of an upper face height can be lessened. In particularly to, in a case where the slanting surfaces 12 of the members 10 and 11 are contacted, a large effect can be expected.

With the above stated construction, for example, even a case where the clearance of the abutting faces before the welding is more than 0.2 mm, the good welding can be carried out. A constructive body is formed by welding the two members 10 and 11.

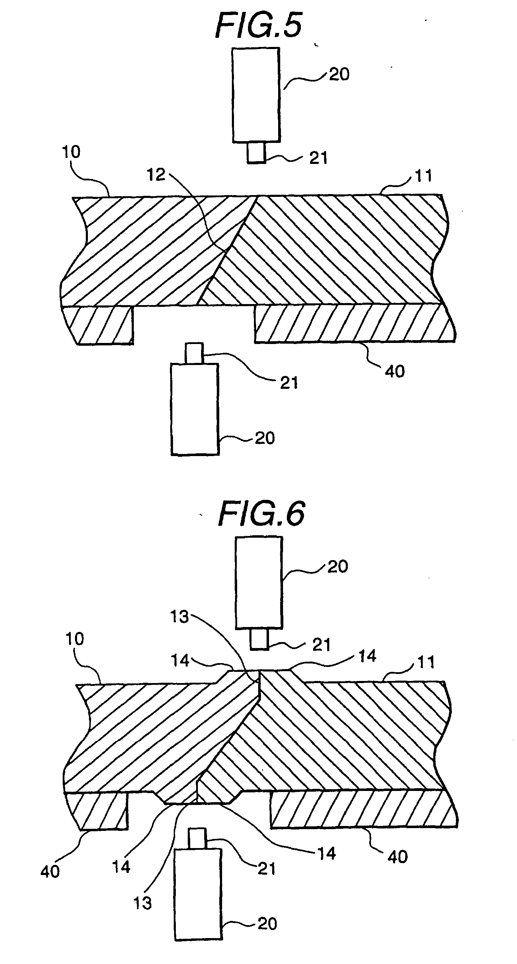

The slanting surface 12 may be formed with a linear line or a circular arc having a concave portion a little at the upper portion. The welding of the lower portion side of the abutting faces is carried out by reversing the members or using a construction in a method shown in Fig. 5.

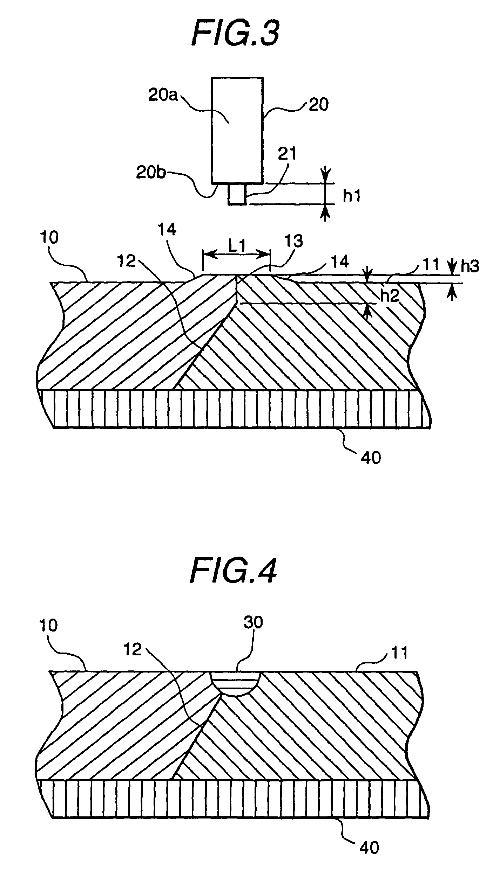

In an embodiment of the invention shown in Fig. 3 and Fig. 4, an abutting face of a joining portion of the members 10 and 11 according to the friction stir welding is formed with a vertical face 13 and a lower portion of the vertical face is formed with the slanting surface 12. At least the slanting surface 12 is provided at a lower portion from the welding bead 30.

The slanting surface 12 is desirable to contact to the welding bead 30. The vertical face 13 is orthogonal to outer faces of the upper portions of the members 10 and 11. Further, at an upper portion of the vertical face 13, projecting portions 14 are projected, such a projecting portion is projected the outside portion (in Fig. 3, an upper portion) from the outer faces of the members 10 and 11.

The shape of the projecting portion 14 has a trapezoidal shape as shown in Fig. 3 when the two projecting portions 14 and 14 are abutted. During the welding, the boundary portion 20b is positioned at an outside portion from the outer face of a non-projecting portion of the members 10 and 11. Namely the boundary portion 20b is positioned between an apex of the projecting portion 14 and the non-projecting portion, namely the boundary portion is positioned in the projecting portion 14.

A front end of the moving direction of the rotary body 20 is positioned at an upper portion from upper faces of the projecting portions 14 and 14. A tip end (in Fig. 3, a lower end) of the small diameter portion 21 is positioned at an upper end of the slanting surface 12. h₂ ≦ h₁.

With the above stated construction, compared with the case of Fig. 1, since the welding portion (the welding bead 30) is the vertical face, the welding portion can be formed symmetrically with the small diameter portion 21 at a center.

Further, even in a case where the clearance formed between the members 10 and 11 is made large, since the projecting portions 14 and 14 are provided, the member which is presented to the plastic fluid in the projecting portions 14 and 14 flows out to the clearance of the vertical faces 13. As a result, no empty voids occur in the welding bead 30.

In a case where the end portions of the member 10 and 11 are abutted, a size control is carried out even the vertical faces 13 and 13 are not contacted each other, in which the slanting surfaces 12 and 12 are to be contacted each other or to be approached each other.

Further, during the welding working, a height position of the boundary portion 20b of the small diameter portion 21 and the large diameter portion 20a of the rotary body 20 is positioned at a range of a height h3. Namely, a center of the projecting portion 14 is positioned in the vertical face 13. A width L1 of the upper ends of the two projecting portions 14 and 14 is larger than the diameter of the large diameter portion 20a of the rotary body 20.

This is considered in a case where the position of the small diameter portion 21 is slipped off against the vertical face. After the friction stir welding working is carried out, the projecting portions 14 and 14 which form the outer sides of the car body of the railway car are cut off. Since the height position of the boundary portion 20b of the rotary body 20 is positioned in the projecting portion 14 as stated in the above, there is a cutting size.

As a result, when the projecting portions 14 and 14 are cut off, there becomes a plane face but there is no dent portion. Accordingly, a projecting portion 14 side is desirable to arrange the outer side of the car body.

By the rotary body 20, the metals of the projecting portions 14 and 14 are moved to the clearance of the vertical faces 13 and 13 and the clearance is buried. As a result, the inventors confirmed cleanly that a tolerance value of the clearance of the vertical faces 13 and 13 before the welding can be enlarged about 1 mm by the experimentation about the aluminum alloy member.

During the welding working, even when the position of the lower end of the small diameter 21 portion is positioned at the vertical face 13 which exists a little the upper portion from interconnection portion between the slanting surface 12 and the vertical face 13 of the abutting faces of the members 10 and 11, a good welding can be carried out.

In a method shown in Fig. 5, the first stir welding is carried out simultaneously to the members 10 and 11 of the embodiment shown in Fig. 1 from both the upper face and the lower face. At an abutting face of upper face side of the members 10 and 11, a center of the small diameter portion 21 of an upper portion rotary body 20 is positioned.

At an abutting face of a lower face side of the members 10 and 11, a center of the small diameter portion 21 of a lower portion rotary body 20 is positioned. The small diameter portion 21 of the lower portion rotary body 20 is directed for the upper portion. Under a condition in which the positions in the moving directions of the two rotary bodies 20 and 20 are the same position, the two rotary bodies 20 and 20 are moved at the same speed, and the friction stir welding is carried out.

Namely, an operation point of a load (a force for inserting the rotary body 20 to the member) according to the upper portion rotary body 20 and an operation point of a load according to the lower portion rotary body 20 are made to not separate largely. Therefore, the bends of the members 10 and 11 are prevented. No bed stand 400 exits at a periphery of the lower portion rotary body 20. A bed stand 40 is positioned toward the vertical direction of the upper portion rotary body 20.

In the welding at the lower portion, since the joining portion of the member 11 is supported through the slanting surface of the member 11, the bend of this portion can be restrained.

In an embodiment shown in Fig. 6, the abutting faces of the upper face side and the lower face side of the members 10 and 11 are formed by the vertical faces 13 and 13. In the vertical direction of the upper portion vertical face 13, the lower portion vertical face 13 does not exist. Between both vertical faces is connected by a slanting surface 12.

In an embodiment shown in Fig. 7, the abutting faces of the upper face side and the lower face side of the members 10 and 11 are formed with vertical faces 13 and 13. The lower portion verticals faces 13 and 13 are existed on an extension line of the upper portion vertical faces 13 and 13.

The abutting faces between the upper and lower vertical faces 13 and 13 are formed with V shape slanting surfaces 12 and 12. An end portion of the member 11 is formed with V shape concave portion and an end portion of the member 10 is formed with V shape dent portion.

In a case where the end portions of the members 10 and 11 are abutted, the dimension control is carried out even when the vertical faces are not contacted each other, the slanting surfaces 12 and 12 are contacted each other or approached each other. For example, an interval of the slanting surfaces 12 and 12 of the dent portion is set to be smaller than an interval of the slanting surfaces 12 and 12 of the concave portion.

With the above stated construction, since the lower portion rotary body 20 is substantially positioned at the lower portion of the upper portion rotary body 20, the bends of the members 10 and 11 can be lessened further. Further, by the provision of V shape slanting surfaces 12, the slip-off toward the upper and the lower directions of the members 10 and 11 can be prevented. As a result, a good friction stir welding can be obtained.

Further, the bottom portion of the V shape dent portion of the member 10 and the apex portion of the V shape concave portion of the member 11 are not provided but a trapezoid shape structure is formed. Further, a clearance 16 is provided between the vertical faces 15 and 15 of the members 10 and 11. With this construction, the contact between the upper and the lower vertical faces 13 and 13 are formed easily.

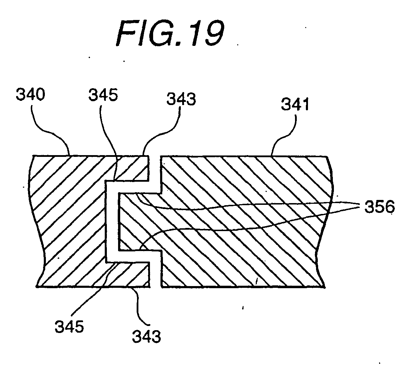

By the provision of the slanting surfaces 12 of the members 10 and 11, the flow-out of the metals during the friction stir welding can be prevented. As shown in Fig. 19, as a construction corresponding to the slanting surfaces 12, it is considered that faces 345 and 346 are provided to be parallel to the outer faces of members 340 and 341 and by these faces the flow-out of the metals is prevented.

However, it is necessary to make an interval between the faces 345 and 356 of the member 340 larger than an interval between the faces 356 and 356 of the member 341. A clearance is formed between the faces 345 and the faces 356. As a result, the plastic flow body is flown out to this clearance and the defect is easily to occur. Or, flanges 343 and 343 of the member 340 are formed to bend toward an inner side.

In a case where the projecting portion 14 is not provided, the bend can be seen. In a case where the projecting portion 14 is provided, it is necessary to make the projecting portion 14 large under the consideration of the above stated clearance and it becomes high cost. In the embodiment shown in Fig. 7, in a case where the interval between the members 10 and 11 is made remote, the similar thing may occur, but since the slanting surfaces are provided, it is made to strengthen from a strength aspect, and as a result the bend of the end portion of the member 10 becomes to be lessened.

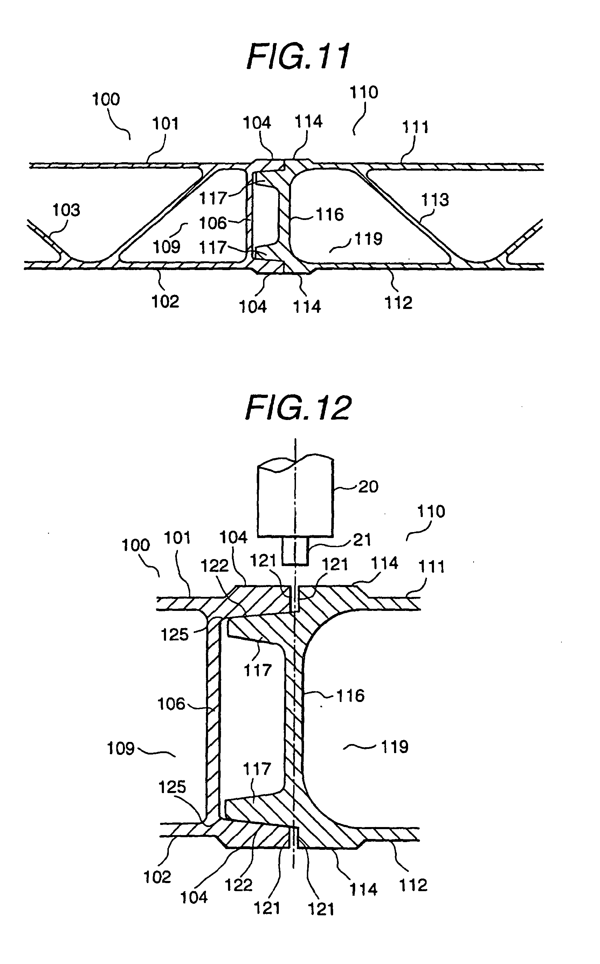

As stated in the above, in the frame member of Fig. 12, next two clearances are easily to occur. One of the two clearances is a clearance between the faces 345 and 356. Another of the two clearances is clearance between a tip end (a vertical face) of the flange 343 and a joining face (a vertical face) of the shape member 341. These two clearances give a big affect to the friction stir welding.

This is taken out under the consideration, in particularly in the embodiments shown in from Fig. 7 to Fig. 13. Namely, since the slanting surfaces 12 are made to contact, the clearance is only the clearance of the vertical face 13, as a result the welding condition can be made good one.

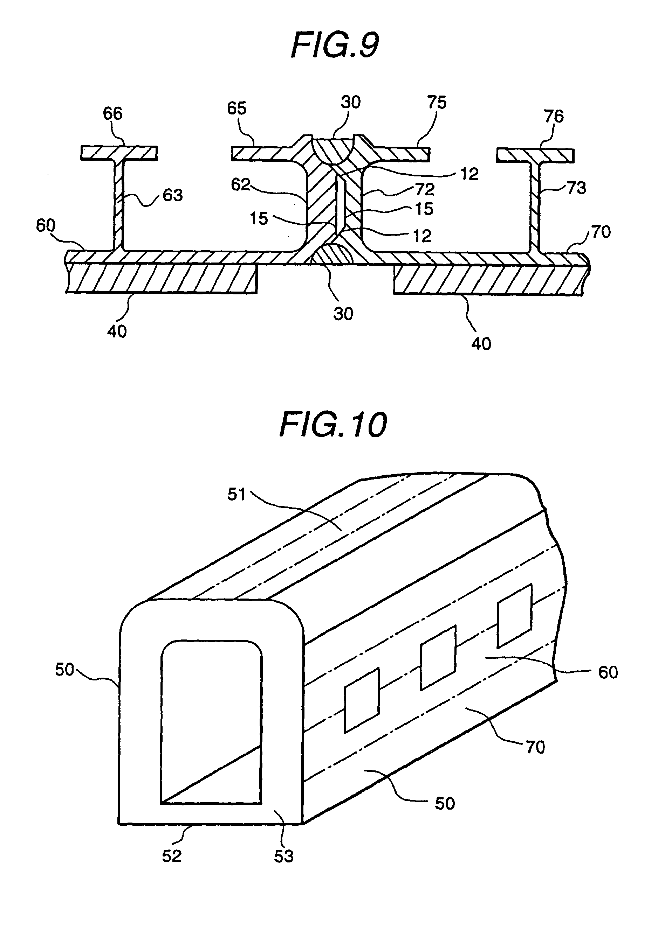

In embodiments shown in from Fig. 8 to Fig. 14, an application example for the car body of the railway car is shown. In Fig. 10, the car body of the railway car is constituted by a side constructive body 50 which constitutes a side face of the car body, an upper face roof constructive body 51, a lower face floor constructive body 52, and an end portion at a longitudinal direction end constructive body 53.

The side constructive body 50 is constituted that by arranging in parallel plural extruded frame members 60 and 70 and by welding an abutting portion those according to the friction stir welding working. Each of the roof constructive body 51 and the floor constructive body 52 is constituted similarly to the side constructive body 50.

The welding between the side constructive body 50 and the roof constructive body 51 and the welding between the side constructive body 50 and the floor constructive body 51 are carried out using an MIG (metal electrode inert gas) welding, etc.

In Fig. 8 and Fig. 9, the extruded frame members 60 and 70 are corresponded to the members 10 and 11 of the embodiment shown in from Fig. 1 to Fig. 7, respectively.

The extruded frame members 60 and 70 are comprised of faces plates 61 and 71 which constitute the outer face of the car body, plural ribs 62, 63 and 72, 73 at a car inner side, and face sheets 65, 66 and 75, 76 which are provided of tip portions of the ribs. Plural ribs 63 and 73 and plural face sheets 66 and 76 are provided along to a width direction of the extruded frame members 60 and 70. To the face sheets 65, 66 and 75, 76, a post (in a case of the side constructive body 50, not shown), a rafter (in a case of the roof constructive body 51, not shown), a lateral beam (in a case of the floor constructive body 52, not shown), and installing seats for various components are welded.

The configuration of the joint shape member is substantially similarly to that of Fig. 7. Similarly to the embodiment shown in Fig. 7, the friction stir welding is carried out simultaneously to both upper and lower faces.

A roller (not shown) for supporting the upper portion rotary body 20 is mounted on the face sheets 65 and 75. One end of the frame member 60 has a concave trapezoid shape and one end of the frame member 70 has a dent trapezoid shape. Another end of the frame member 60 has the shape of the above stated one end frame member 70 or the shape of the above stated one end of the frame member 60. The two frame members are able to be assembled.

The extrude frame members 60 and 70 have two-plane structures as stated in the above. One of the planes are the face sheets 61 and 71 and another of the planes are face sheets 65, 66 and 75 and 76. Against to the above stated two-plane structure, in a case where the friction stir welding working is carried out from the outer side, it is considered that the face sheets of the joining portion are bent toward for the another face sheets side according to the above stated vertical load during the welding.

However, in the joint members shown in Fig. 8, since the end portion of the extruded frame member 60 has the rib 62 and the friction stir welding is carried out to the upper portion and the lower portion of this end portion, as a result the bends do not occur on the joining portion of the frame members 60 and 70. Namely, the rib 62 can works a support member for receiving the vertical load during the friction stir welding. Namely, the rib 62 is existed on a line for connecting the vertical faces 13 and 13.

On the other hand, since the frame member 70 is mounted on the slanting surface of rib 62 and further the rib 72 is existed at a vicinity of the joining portion, the bend doe not occur to the joining portion of the frame member 70. This facts will be understood by comparing with a structure shown in Fig. 19.

Namely, the vertical faces 13 and 13 are existed on a range of an extension line of the plate thickness of the rib 62. In the above stated range, at least parts of the welding beads 30 and 30 are positioned.

The above stated joint shape member can be applied to a hollow extruded frame member to which the face sheets 65, 66 (75, 76, 77) are connected.

After the manufacture of the side constructive body 50, the projecting portion 14 is cut off, and the outer face is made to a flat smooth structure. It is not always necessarily to carry out the cut off of the projecting portion in the car inner side. After that a finishing may be carried out through a painting finish, but it will be explained in a case where the painting finish is not carried out.

After that, a hair line finish, or a transparent painting finish is carried out. Since the friction stir welding is carried out, the joining portion can not confirmed through a visual observation in comparison with MIG welding. As a result, a texture can be appeared but it can be obtained a good show of the side constructive body. It can be obtained by a low cost.

The welding portions of the side constructive body 50, the roof constructive body 51, the floor constructive body 52, and the end constructive body 53 are positioned at a position difficult to see in the side constructive side.

A joint of one extruded frame member of the two-plane constructive body will be explained referring to Fig. 11 and Fig. 12. An extruded frame member 100 (110) comprises substantially parallel two face sheets 101 and 102 (111 and 112), plural ribs 103 and 106 (113 and 116) for connecting the two face sheets, a projecting portion 104 (114) which is projected toward a thickness directions of the frame members 110 and 110 in an end portion of a joining portion, and projecting parts 117 and 117 which are projected toward the opposing frame member 110 from the end portion rib 106.

The plural ribs 103 and 113 are provided along to a width direction of the frame members 100 and 110. The rib 103 (113) is provided to incline against the face sheets 101 and 102 (111 and 112). The rib 106 (116) is provided to be orthogonal to the face sheets 101 and 102 (111 and 112). Each of reference numerals 109 and 119 denotes a hollow portion.

On the end portions of the frame members 100 and 110, vertical faces 121 and slanting surfaces 122 are provided. The vertical faces 121 are positioned at the end portions of the face sheets 101, 102 and 111, 112. The slanting surface 122 of the frame member 110 is positioned at a face of the face sheet side of the projecting part 117. The slanting surface 122 of the frame member 110 is positioned at a dent portion which receives the projecting part 117. The slanting surface 122 is inclined from a position in which the vertical face 121 is entered to the thickness direction of the frame member.

The projecting part 117 is projected toward an outer portion (the frame member 100 side) in the width direction of the frame member 100. The projecting portions 104 and 114 are positioned at the end portions of the respective face sheets 101, 102 and 111, 112.

The rib 116 of the frame member 110 is positioned at the extension line of the joining portion. On the assumption that the axial center of the rotary body 20 is positioned on the extension line of a plate thickness center of the rib 116. The vertical faces 121 of the frame member 110 are positioned a little a center side of the width direction of the frame member 110 from the plate thickness center of the rib 116.

The two vertical faces 121 are existed within a range of the extension line of the plate thickness of the rib 116. The plate thickness of the rib 116 is thicker than the plate thickness of the rib 106.

In a case where by assembling the frame members 100 and 110, the slanting surfaces 122 and 122 are contacted, some clearance between the vertical face 121 of the frame member 100 and the vertical face 121 of the frame member 110 is formed. For example, an interval between the slanting surfaces 122 and 122 of the dent portion is provided to be smaller than an interval between the slanting surfaces 122 and 122 of the concave portion. Or the clearance of the slanting surfaces 122 is provided to be small.

Since the rib 106 is provided on the frame member 100, the thickness of the projecting portion 104 and the slanting surface 122 can be improved in the accuracy and manufactured easily at the end portions.

Since at the connecting portion between the slanting surface 122 and the rib 106 of the frame member 100 since a dent portion which is dented from the extension line of the slope 122 is provided, the cross-sectional area of the end portion of the frame member 100 can be made small and the light weight structure can be obtained.

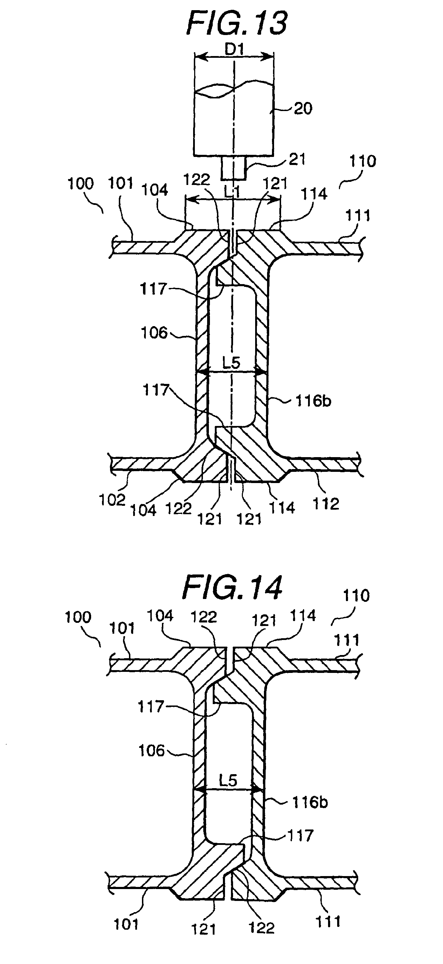

In an embodiment shown in Fig. 13, the abutting portion is positioned at an intermediate position between the rib 106 and a rib 116b. A distance from the vertical face 121 to the rib 106 of the frame member 100 is substantially same to a distance from the vertical face 121 to the rib 116b of the frame member 110. The plate thickness of the two ribs 106 and 116b are the same.

An interval L5 between the two ribs 106 and 116b is larger than the diameter of the small diameter portion 21 but is smaller than the diameter D1 of the large diameter portion 20b. A width (the same toward the width direction of the frame member) of the projecting portion 104 is the same to a width of the projecting portion 114.

The vertical faces are detected by an optical sensor and by positioning the axial center of the rotary body 20 at the intermediate position between the vertical faces 121 and 121 the friction stir welding working is carried out. As a result, the axial center of the rotary body 20 is positioned at the intermediate position between the two ribs 106 and 116b.

Further, the axial center of the rotary body 20 is positioned at the intermediate position of the widths of the projecting portions 104 and 114. The center of the welding bead is positioned at the intermediate position between the two ribs 106 and 116. The size and the position of the rotary body 20, and other constructions are similarly to the above stated embodiments.

With the above construction, since the load during the welding working are burdened by the two ribs 106 and 116b, the plate thickness of the rib 116b can be formed thinner than that of the embodiment shown in Fig. 12. As a result, a total value of the plate thickness of the two ribs 106 and 116b can be made smaller than that of the embodiment shown in Fig. 12. As s result, the light weight structure can be attained. Further, in the embodiment shown in Fig. 12 within the two ribs 106 and 116, since the load burdens concentrically to the rib 116, the rib 116 is easily to bend.

However, in the embodiment shown in Fig. 13, the two ribs 106 and 116b receive the substantially same load, the bending deformation of the ribs 106 and 116b hardly occur. It is preferable to make substantially the same the distance from the rib 106 and to the axial center of the rotary body 20 and the distance from the rib 116 to the axial center of the rotary body 20.

An interval L5 between the two ribs 106 and 116b is smaller than the diameter D1 of the large diameter portion 20b of the rotary body 20. As a result, the load by the large diameter portion 20a is added to the ribs 106 and 116b and therefore the bend deformation of the face sheets 101 and 111 can be made small.

Under the consideration of the error of the position of the rotary body 20, since the width L1 between the projecting portions 104 and 114 is made larger than the diameter D1 of the large diameter portion 20b (L1 > D1). Further, the friction stir welding working is finished, the welding bead is formed a little large along to the large diameter portion 20a and the small diameter portion 21.

After that, one face or the both faces of the projecting portions 104 and 114 is cut off along to the face sheets 101, 111, 102 and 112. To the remaining projecting portions 104 and 114, the welding bead of the large diameter portion 20b is left. The size (the diameter) of this welding bead is larger than the interval (L5). It can say that the center of the welding bead is existed substantially at the center of the two ribs 106 and 116b.

Further, in the frame members 100 and 110 before the welding, a distance (≒ L5/2) from the vertical faces 121 and 121 to the ribs 106 and 116b is smaller that a width (≒ L1/2) of the projecting portions 104 and 114. The ribs 106 and 116b are existed at another end side of the width direction of the frame member from the vertical faces 121 and 121.

The diameter D1 of the large diameter portion 20a, the size of the welding bead according to the large diameter portion 20a, the position of the rib 106 and 116b stated in the above are existed in a range of the projecting portions 104 and 114 at the width direction of the frame members 100 and 110.

The frame members 100 and 110 have the slanting surfaces 122, but when the projecting parts 117 are provided, it may be employ the prior art structure shown in Fig. 21.

In an embodiment shown in Fig. 14, in comparison with the embodiment shown in Fig. 13, the projecting part 117 at the side of the plate face 112 is provided at a side of the rib 106.

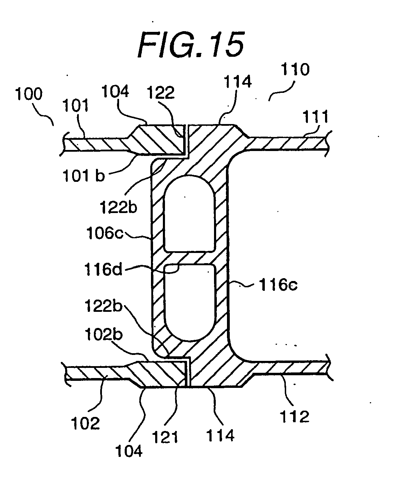

In a construction shown in Fig. 15 (not an embodiment of the invention), two ribs 106c and 116c of the joining portion are provided on the frame member 110. At an intermediate position of the two ribs 106c and 116c, the end portions of the face sheets 101, 102 and 111, 112 of the two frame members 100 and 110 are positioned. The two ribs 106c and 116c support the load according to the rotary body 20. The rib 106c and the rib 116c are connected through a rib 116d. With this construction, the bending of the ribs 106 and 116c during the welding working hardly occur.

The construction of this embodiment has no slanting surface. The face sheets 10. A rear face 101b (102b) of the end portion of the face sheet 101 (102) is projected toward a side of another face sheet 102 (101) and 102 are overlapped on the horizontal faces 122b and a thickness of this rear face is thicker than that of the face sheet 101 (102). This structure can be applied to other embodiments.

In the above stated embodiments, "the face sheets (or the outer faces) being in parallel" indicates to be arranged to be substantially in parallel. Further, "orthogonal to the face sheet" indicates to be arranged to be substantially orthogonal to the face sheet.

In the case of the railway car, the side constructive body and the roof constructive body have the circular arc shape, and there is a case in which two face sheets can not be arranged in parallel. The present invention can be adopted to the above structure. Further, the present invention can be adopted to a pipe and other constructive bodies.

In a case where an angle of a pair of the vertical faces 13 and 121 is not large, they can form V shape structure. To compensate the V shape space, it is necessary to make large the projecting portions 14, 104 and 114. As a result, the vertical face is preferable to be the substantial vertical face, however it can be inclined a little.

At the connection portion of the vertical face 121 and the slanting surface 122, a face can be provided in parallel against the apex of the projecting portion 104, but this face must be small.

To the one joining portion the two projecting portions 104 and 114 are provided, however only one projection 104 (114) can be provided.

The embodiments shown in from Fig. 11 to Fig. 13 can be adopted to the two-plane constructive body shown in Fig. 8. Further, the friction stir welding shown in from Fig. 11 to Fig. 13 can carried out simultaneously both the upper face and the lower face, however it can be carried out one side face each.

## Claims

1. A structural body having two members (10, 11; 60, 70; 100, 110) joined by friction stir welding along a joint line, said body having two opposite sides,
each said member (10, 11; 60, 70; 100, 110) having, at at least one of said opposite sides and adjacent said joint line, an outwardly facing face, said respective outwardly facing faces being co-linear as seen in cross-section across the joint line,
said members having, at said joint line, mutually opposed mutually contacting edge faces (12; 121, 122), there being a friction stir welding bead (30) at said joint line extending inwardly from said outwardly facing faces, said edge faces ending at said bead,
**characterised in that** each of said edge faces comprises, in the vicinity of said bead, a slanting surface (12; 122) which is connected to said welding bead, said respective slanting surfaces (12; 122) slanting in the same direction relative to said outwardly facing faces and being in mutual contact with each other,
each said member having, adjacent said bead, a raised portion (14; 104, 114) projecting outwardly with respect to said outwardly facing face thereof.

2. A structural body according to claim 1, wherein each said slanting surfaces (12; 122) ends at said bead.

3. A structural body according to claim 1 or 2, having, at each of said two opposite sides, said outwardly facing faces, said friction stir welding bead (30), said edge faces, said slanting surfaces (12; 122) and said raised portions (14; 104, 114),
wherein:-
said two welding beads (30) are located on a line orthogonal to said outwardly facing faces,
said edge of a first one (11; 60; 110) of said members provides a projecting portion (15; 117) of said first member, said slanting surfaces (12; 122) of said first member being surfaces of said projecting portion,
said edge of the second one (10; 70; 100) of said members provides a recess portion of said second member which receives said projecting portion (15; 117) of said first member, said slanting surfaces (12; 122) of said second member being surfaces of said recess and contacting said slanting surfaces of said first member.

4. A structural body according to claim 1 or 2, wherein said edge face of a first one (11; 60; 110) of said members provides a tapering projecting portion (15; 117) of said first member, said edge face of the second one (10; 70; 100) of said two members provides a recess portion of said second member which receives said projecting portion (15; 117) of said first member, said slanting surfaces (12; 122) being respectively surfaces of said projecting portion and said recess portion.

5. A method of making a structural body having two members (10, 11; 60, 70; 100, 110) joined by friction stir welding, comprising the steps of:-
(i) providing said two members (10, 11; 60, 70; 100, 110) each having two opposite sides and, at at least one of said sides, an outwardly facing face, and each having at one edge thereof an edge face including a slanting surface (12; 122) which slants relative to said outwardly facing face, each said member further having, adjacent said edge face, a raised portion (14; 104, 114) projecting outwardly with respect to said outwardly facing face thereof,
(ii) arranging said two members edge-to-edge so that said respective outwardly facing faces thereof are co-linear with said respective raised portions (14; 104, 114) adjoining and so that said edge faces thereof contact at said slanting surfaces (12; 122),
(iii) carrying out friction stir welding using a rotating friction stir welding body (20, 21) which enters said raised portions (14; 104, 114) and forms a welding bead (30) which extends inwardly from said outwardly facing faces and is in the vicinity of said slanting faces (12; 122).

6. A method according to claim 5, wherein, following the friction stir welding, said slanting faces (12; 122) end at said bead (30).

7. A method according to claim 5 or 6, wherein said edge face of a first one (11; 60; 110) of said members provides a tapering projecting portion (15; 117) of said first member, said edge face of the second one (10; 70; 100) of said two members provides a recess portion of said second member which receives said projecting portion (15; 117) of said first member, said slanting surfaces (12; 122) being respectively surfaces of said projecting portion and said recess portion.

8. A method according to claim 5 or 6, wherein each of said two members provided in step (i) has, at both of said opposite sides thereof, a said outwardly facing face, a said slanting surface (12; 122) and a said raised portion (14; 104, 114), and
in step (ii) both the respective pairs of said slanting surfaces (12; 122) contact each other, and
in step (iii) the friction stir welding is performed at both of the opposite sides of the members to form respective said welding beads at both sides.

## Patentansprüche

1. Mechanischer Körper mit zwei Elementen (10, 11; 60, 70; 100, 110), die entlang einer Verbindungslinie durch Reibrührschweißen miteinander verbunden sind, wobei der Körper zwei einander gegenüberliegende Seiten aufweist und
die genannten Elemente (10, 11; 60, 70; 100, 110) jeweils benachbart zur Schweißlinie und auf mindestens einer der gegenüberliegenden Seiten eine auswärts gewandte Fläche aufweisen und die jeweiligen auswärts gewandten Flächen im Querschnitt über die Verbindungslinie hinweg gesehen colinear sind, und
die genannten Elemente an der Verbindungslinie einander gegenüberliegende, einander berührende Kantenflächen (12; 121, 122) aufweisen und an der Verbindungslinie, von den auswärts gewandten Flächen nach innen verlaufend eine Reibrührschweißlage (30) vorliegt, an der die Kantenflächen enden,
**dadurch gekennzeichnet, daß** die Kantenflächen jeweils in der Gegend der Schweißlage eine schräge Fläche (12; 122) aufweisen, die mit der Schweißlage verbunden ist, wobei die entsprechenden schrägen Flächen (12; 122) bezüglich der auswärts gewandten Flächen in die gleiche Richtung geneigt sind und im Kontakt miteinander stehen, und
die genannten Elemente jeweils benachbart zur Schweißlage einen erhöhten Bereich (14; 104, 114) aufweisen, der bezüglich ihrer jeweiligen auswärts gewandten Flächen auswärts hervorsteht.

2. Körper nach Anspruch 1, wobei die schrägen Flächen (12; 122) jeweils an der Schweißlage enden.

3. Körper nach Anspruch 1 oder 2, der auf beiden gegenüberliegenden Seiten solche auswärts gewandten Flächen, eine solche Reibrührschweißlage (30), solche Kantenflächen, solche schrägen Flächen (12; 122) und solche erhöhten Bereiche (14; 104, 114) aufweist,
wobei
die beiden Schweißlagen (30) auf einer zu den auswärts gewandten Flächen senkrechten Linie angeordnet sind,
die Kante eines ersten (11; 60; 110) der Elemente einen vorstehenden Bereich (15; 117) des ersten Elements aufweist und die schrägen Flächen (12; 122) des ersten Elements Flächen des vorstehenden Bereichs sind und
die Kante des zweiten (10; 70, 100) der Elemente einen Vertiefungsbereich des zweiten Elements aufweist, der den vorstehenden Bereich (15; 117) des ersten Elements aufnimmt und wobei die schrägen Flächen (12, 122) des zweiten Elements Flächen der Vertiefung sind und die schrägen Flächen des ersten Elements berühren.

4. Körper nach Anspruch 1 oder 2, wobei die Kantenfläche eines ersten (11; 60; 110) der Elemente einen verjüngten vorstehenden Bereich (15; 117) des ersten Elements bildet, die Kantenfläche des zweiten (10; 70; 100) der beiden Elemente einen Vertiefungsbereich des zweiten Elements bildet, der den vorstehenden Bereich (15; 117) des ersten Elements aufnimmt, und die schrägen Flächen (12; 122) jeweils Flächen des vorstehenden Bereichs und des Vertiefungsbereichs sind.

5. Verfahren zur Herstellung eines mechanischen Körpers mit zwei Elementen (10, 11; 60, 70; 100, 110), die durch Reibrührschweißen miteinander verbunden sind, mit folgenden Schritten:
(i) Bereitstellen der beiden Elemente (10, 11; 60, 70; 100, 110) jeweils mit zwei einander gegenüberliegenden Seiten und mit einer auswärts gewandten Fläche auf mindestens einer der Seiten, wobei die Elemente jeweils an ihrer einen Kante eine Kantenfläche mit einer schrägen Fläche (12; 122) aufweisen, die bezüglich der auswärts gewandten Fläche geneigt ist, und benachbart zur Kantenfläche jeweils einen erhöhten Bereich (14; 104, 114) aufweisen, der bezüglich ihrer auswärts gewandten Fläche auswärts vorsteht,
(ii) Anordnen der beiden Elemente Kante an Kante, so daß ihre entsprechenden auswärts gewandten Flächen colinear sind, während die jeweiligen erhöhten Bereiche (14; 104, 114) aneinandergrenzen und so, daß sich ihre Kantenflächen an den schrägen Flächen (12; 122) berühren,
(iii) Ausführen von Reibrührschweißen unter Verwendung eines sich drehenden Reibrührschweißkörpers (20, 21), der in die erhöhten Bereiche (14; 104, 114) eingreift und eine Schweißlage (30) bildet, die sich von den auswärts gewandten Flächen einwärts erstreckt und sich in der Umgebung der schrägen Flächen (12; 122) befindet.

6. Verfahren nach Anspruch 5, wobei die schrägen Flächen (12; 122) im Anschluß an das Reibrührschweißen an der Schweißlage (30) enden.

7. Verfahren nach Anspruch 5 oder 6, wobei die Kantenfläche eines ersten (11; 60; 110) der Elemente einen verjüngten vorstehenden Bereich (15; 117) des ersten Elements bildet, die Kantenfläche des zweiten (10; 70; 100) der beiden Elemente einen Vertiefungsbereich des zweiten Elements bildet, der den vorstehenden Bereich (15; 117) des ersten Elements aufnimmt, und die schrägen Flächen (12; 122) jeweils Flächen des vorstehenden Bereichs und des Vertiefungsbereichs sind.

8. Verfahren nach Anspruch 5 oder 6, wobei die beiden in Schritt (i) bereitgestellten Elemente jeweils auf ihren beiden gegenüberliegenden Seiten eine solche auswärts gewandte Fläche, eine solche schräge Fläche (12; 122) und einen solchen erhöhten Bereich (14; 104, 114) aufweisen und
in Schritt (ii) beide entsprechenden Paare der schrägen Flächen (12; 122) einander berühren und
in Schritt (iii) das Reibrührschweißen an beiden gegenüberliegenden Seiten der Elemente durchgeführt wird, um die Schweißlagen entsprechenderweise auf beiden Seiten zu bilden.

## Revendications

1. Corps de structure ayant deux éléments (10, 11 ; 60, 70 ; 100, 110) reliés par soudage par friction-malaxage le long d'une ligne de joint, ledit corps ayant deux côtés opposés,
chaque dit élément (10, 11 ; 60, 70 ; 100, 110) ayant, sur au moins un desdits côtés opposés, et adjacente à ladite ligne de joint, une face dirigée vers l'extérieur, lesdites faces dirigées vers l'extérieur respectives étant colinéaires telles que vues en coupe transversale à travers la ligne de joint,
lesdits éléments ayant, sur ladite ligne de joint, des faces de bord mutuellement en contact mutuellement opposées (12 ; 121, 122), un cordon de soudure par friction-malaxage (30) au niveau de ladite ligne de joint s'étendant vers l'intérieur à partir desdites faces dirigées vers l'extérieur, lesdites faces de bord se terminant au niveau dudit cordon,
**caractérisé en ce que** chacune desdites faces de bord comporte, au voisinage dudit cordon, une surface inclinée (12 ; 122) qui est reliée audit cordon de soudure, lesdites surfaces inclinées respectives (12 ; 122) s'inclinant dans la même direction par rapport auxdites faces dirigées vers l'extérieur et étant en contact mutuel l'une avec l'autre,
chaque dit élément ayant, adjacente audit cordon, une partie surélevée (14 ; 104, 114) faisant saillie vers l'extérieur par rapport à ladite face dirigée vers l'extérieur de celui-ci.

2. Corps de structure selon la revendication 1, dans lequel chaque dite surface inclinée (12 ; 122) se termine au niveau dudit cordon.

3. Corps de structure selon la revendication 1 ou 2, comportant, sur chacun desdits deux côtés opposés, lesdites faces dirigées vers l'extérieur, ledit cordon de soudure par friction-malaxage (30), lesdites faces de bord, lesdites surfaces inclinées (12 ; 122) et lesdites parties surélevées (14 ; 104, 114),
dans lequel :
lesdits deux cordons de soudure (30) sont positionnés sur une ligne perpendiculaire auxdites faces dirigées vers l'extérieur,
ledit bord d'un premier (11 ; 60 ; 110) desdits éléments fournit une partie en saillie (15 ; 117) dudit premier élément, lesdites surfaces inclinées (12 ; 122) dudit premier élément étant des surfaces de ladite partie en saillie,
ledit bord du second (10 ; 70 ; 100) desdits éléments fournit une partie d'évidement dudit second élément qui reçoit ladite partie en saillie (15 ; 117) dudit premier élément, lesdites surfaces inclinées (12 ; 122) dudit second élément étant des surfaces dudit évidement et venant en contact avec lesdites surfaces inclinées dudit premier élément.

4. Corps de structure selon la revendication 1 ou 2, dans lequel ladite face de bord d'un premier (11 ; 60 ; 110) desdits éléments fournit une partie en saillie biseautée (15 ; 117) dudit premier élément, ladite face de bord du second (10 ; 70 ; 100) desdits deux éléments fournit une partie d'évidement dudit second élément qui reçoit ladite partie en saillie (15 ; 117) dudit premier élément, lesdites surfaces inclinées (12 ; 122) étant respectivement des surfaces de ladite partie en saillie et de ladite partie d'évidement.

5. Procédé de fabrication d'un corps de structure ayant deux éléments (10, 11 ; 60, 70 ; 100, 110) reliés par soudage par friction-malaxage, comportant les étapes consistant à :
(i) fournir lesdits deux éléments (10, 11 ; 60, 70 ; 100, 100) ayant chacun deux côtés opposés et, sur moins un desdits côtés, une face dirigée vers l'extérieur, et chacun ayant sur un bord de celui-ci une face de bord comportant une surface inclinée (12 ; 122) qui s'incline par rapport à ladite face dirigée vers l'extérieur, chaque dit élément ayant en outre, adjacente à ladite face de bord, une partie surélevée (14 ; 104, 114) faisant saillie vers l'extérieur par rapport à ladite face dirigée vers l'extérieur de celui-ci,
(ii) disposer bord à bord lesdits deux éléments de sorte que lesdites faces dirigées vers l'extérieur respectives de ceux-ci soient colinéaires, lesdites parties surélevées respectives (14 ; 104 ; 114) étant contiguës et de sorte que lesdites faces de bord de ceux-ci sont en contact au niveau desdites surfaces inclinées (12 ; 122),
(iii) effectuer un soudage par friction-malaxage en utilisant un corps de soudage par friction-malaxage rotatif (20, 21) qui pénètre dans lesdites parties surélevées (14 ; 104 ; 114) et forme un cordon de soudure (30) qui s'étend vers l'intérieur à partir desdites faces dirigées vers l'extérieur et situé au voisinage desdites faces inclinées (12 ; 122).

6. Procédé selon la revendication 5, dans lequel, après le soudage par friction-malaxage, lesdites faces inclinées (12 ; 122) se terminent au niveau dudit cordon (30).

7. Procédé selon la revendication 5 ou 6, dans lequel ladite face de bord d'un premier (11 ; 60 ; 110) desdits éléments fournit une partie en saillie biseautée (15 ; 117) dudit premier élément, ladite face de bord du second (10 ; 70 ; 100) desdits deux éléments fournit une partie d'évidement dudit second élément qui reçoit ladite partie en saillie (15 ; 117) dudit premier élément, lesdites faces inclinées (12 ; 122) étant respectivement des surfaces de ladite partie en saillie et de ladite partie d'évidement.

8. Procédé selon la revendication 5 ou 6, dans lequel chacun desdits deux éléments fournis à l'étape (i) comporte, sur ses deux dits côtés opposés, une dite face dirigée vers l'extérieur, une dite surface inclinée (12 ; 122) et une dite partie surélevée (14 ; 104, 114), et
à l'étape (ii) les deux paires respectives de dites surfaces inclinées (12 ; 122) sont en contact l'une avec l'autre, et
à l'étape (iii) le soudage par friction-malaxage est effectué sur les deux côtés opposés des éléments pour former lesdits cordons de soudure respectifs sur les deux côtés.
